# EUROPEAN PATENT SPECIFICATION

(11) **EP 3 823 885 B1**
(45) Date of publication and mention of the grant of the patent: **14.09.2022**
(21) Application number: 19749458.6
(22) Date of filing: 17.07.2019
(51) Int. Cl.: B62H 5/00, G08B 13/24, G06K 7/08, G06K 19/06

(54) **BICYCLE PROVIDED WITH A DEVICE FOR ADDING AN IDENTIFICATION CODE AND SYSTEM USING SUCH A CODE**
FAHRRAD MIT EINER VORRICHTUNG ZUM HINZUFÜGEN EINES IDENTIFIKATIONSCODES UND SYSTEM MIT EINEM DERARTIGEN CODE
VÉLO ÉQUIPÉ D'UN DISPOSITIF D'AJOUT D'UN CODE D'IDENTIFICATION ET SYSTÈME UTILISANT UN TEL CODE

(30) Priority: 17.07.2018 NL 2021328
(43) Date of publication of application: 26.05.2021
(73) Proprietor: Bohan Product Development B.V., 9206 BA Drachten (NL)
(72) Inventor: SCHUMACHER, Matthijs, 3971 PD Driebergen-Rijsenburg (NL); DRATZIDIS, Georgeos, 3971 PD Driebergen-Rijsenburg (NL); DE VOGEL, Bastiaan, 3971 PD Driebergen-Rijsenburg (NL)
(74) Representative: Patentwerk B.V.
(86) International application number: PCT/NL2019/050457
(87) International publication number: WO 2020/017967

(56) References cited:
- DE-A1- 3 729 740
- GB-A- 1 495 677
- JP-A- H06 251 031
- NL-A- 7 903 835
- NL-C1- 1 033 291
- US-A- 3 813 658
- US-A- 5 085 062

## Description

The present invention relates to a bicycle comprising a device for adding an identification code to the bicycle and a system comprising a number of such bicycles.

In particular, the invention relates to adding such a code to a bicycle for the purpose of registering an ascription of the bicycle. With motorcars, it is customary to provide the chassis with a number, which number is recorded in a vehicle registration certificate and stored in a register of vehicle records, which also holds the ascription of the respective motorcar. Although the ascription in the register of vehicle records for motorcars is not coupled to ownership, a registration may be used for that purpose. With bicycles, it is not unusual for manufacturers to provide frame numbers thereon, but these are often unique to each manufacturer. It is likewise known to have the police engrave a registration number, for example a postcode, onto the bicycle frame or a registration number may be added by applying a sticker. In both cases, the owner does receive a certificate of ownership containing the frame number or the engraved number, but as there is no central register, there is no possibility to register a change in ownership. It is therefore also a prime object of the present invention to provide a device for adding an identification code to bicycles, which does not have the priorart drawbacks, or provides a usable alternative thereto.

To this end, the invention provides a device adding an identification code to a bicycle, comprising a holder with a series of magnet-holder locations wherein the absence or orientation of the north and the south pole of a magnet is selectable at each of the magnet-holder locations, and wherein the identification code is formed by the combination of the respective absences or orientations of the north and the south poles of magnets provided at the magnet-holder locations.

By then attaching the holder according to the invention in a tube of the frame of a bicycle, the bicycle is provided with the identification code. The code thus contains a series of possible empty locations and magnetic north and south poles which are readable and as a result of which combination the vehicle may be identified. The number of identification codes which can be produced in this way is three to the power of the number of locations, because each magnet-holder location has three options: no magnet, a north pole or a south pole.

The invention is defined by the features of claim 1. Preferred embodiments are defined by the dependent claims.

US 3823658 A discloses a vehicle comprising a device for providing an identification code by means of a series of oriented magnets. NL1033291 C1 discloses a bicycle according to the preamble of claim 1.

According to the present invention, the holder is provided in a frame of the bicycle and to this end has a substantially rod-shaped outer side. Logically, the holder may thus be a rod, but may also be a tube, pipe, etc. A holder having a rod-shaped outer side is particularly suitable for installation in a tube of a bicycle frame, more particularly in the tube of the frame intended to accommodate a saddle pin, since the inside of this tube is usually accessible via an opening after the saddle and the saddle pin have been removed.

Even though the device according to the invention is placed in the frame of a bicycle, it is also possible to read out, on the outer side of the frame, the magnetic field generated by the magnets as well as the absence of magnets. With an aluminium, a carbon or (fibre-reinforced) plastic frame, the field of the magnets will usually be sufficiently strong to be readable on the outer side of the frame. In the case of an iron frame, the frame may be magnetically conductive in such a way that it short-circuits the magnetic fields of the magnets. In such a case, the frame may be provided with a series of holes at the location of the magnet-holder locations on the holder, corresponding with the series of magnet-holder locations of the holder when the holder has been arranged in the frame. This series of magnet-holder locations preferably consists of several straight lines with equal distances between the magnet-holder locations.

At said magnet-holder locations, the holder is provided with recesses for holding magnets which extend in radial direction of the holder. The invention furthermore provides an abovementioned device provided with at least one magnet, placed on one of the magnet-holder locations, in the form of recesses, wherein the direction from the north to the south pole of a magnet held by a magnet-holder location extends radially with respect to the holder. The magnet may be a permanent magnet, such as a natural magnet or comprise a magnetized material.

The device according to the invention comprises a clamping element which is displaceable, with at least one movement component running in a radial direction, in order to clamp the device in the tube of the frame of the bicycle. Placing the device in the vehicle is then effected by placing the holder in the frame and then displacing the clamping element, with the at least one component running in a radial direction, until it bears against the inner wall of the frame.

In a practical embodiment, the peripheral wall of the holder is provided with at least one slot extending in the length direction of the holder and the clamping element comprises a spline which is accommodable in the slot, wherein the slot and/or the spline comprise at least one surface which tapers in a radial direction with respect to the peripheral wall of the holder. Moving such a spline through the slot in the axial direction of the holder simultaneously produces a movement in the radial direction which eventually, when the inner side of the frame is reached, will provide the clamping action.

In order to achieve the displacement, an operating element may be provided at a head end of the holder for displacing the spline with respect to the slot. The operating element may comprise, for example, a threaded pin which is installed in an opening provided with matching screw thread in or connected to the spline, wherein the option to engage the pin is provided at the head end of the holder.

In a further embodiment, the device according to the invention comprises at least one perforating element, such as a sharp protrusion, for penetrating a glue cartridge. This glue cartridge may be placed in a frame after the device has been arranged and clamped in the respective frame, wherein the glue from the cartridge fixing the device after the cartridge has been penetrated. If desired, it is possible to fit a sealing, for example a metal disc, after the glue has been applied, so that the operating element is no longer approachable either. In this way, the undesired removal of a device according to the invention is rendered even more difficult.

According to the invention the above-described device is placed in a tube of the bicycle frame, more particularly in the tube of the frame intended to accommodate a saddle pin. For anti-theft considerations, but also in order to facilitate the reading-out of the identification code, an indicator may be provided on the outer side of the vehicle, in particular on the frame, which indicates where the device is situated.

In order to read out the identification code, there may be provided a not claimed reading device which comprises at least one sensor, such as a Hall sensor or a different magnet sensor, for determining the combination of the respective absences and orientations of the north and the south poles of fitted magnets. Such a device may comprise, for example, a mobile telephone, provided with an application which records and processes the magnetic fields detected by a geo-magnetic sensor or magnetometer in the mobile telephone. If a reading device with a single sensor is used, it has to be moved past the device in order to read out an identification code.

If this is undesirable, it is also possible, to use a reading device comprising several sensors arranged on the reading device in such a manner that they are placeable opposite the series of magnet-holder locations of an above-described device, each for detecting the absence or orientation of the north and the south poles of fitted magnets. In this case, the reading device may be designed to have various forms, for example the form of a pair of pliers which can grip around a bicycle frame. For accurately positioning the reading device, the vehicle may be provided with a stop, for example a stop in the form of a ring which is placed around a tube. If visible on the outer side of the vehicle, such a stop may also provide the advantage of indicating that the respective vehicle is provided with an identification means, resulting in a reduced risk of theft.

The invention will now be explained in more detail by means of the non-limiting exemplary embodiments illustrated in the following figures, in which:
Fig. 1 shows a diagrammatic perspective view of a device according to the present invention;
Figs. 2a-d show diagrammatic side views of a device according to the present invention; and
Fig. 3 shows a vehicle in which the device according to the invention is fitted.

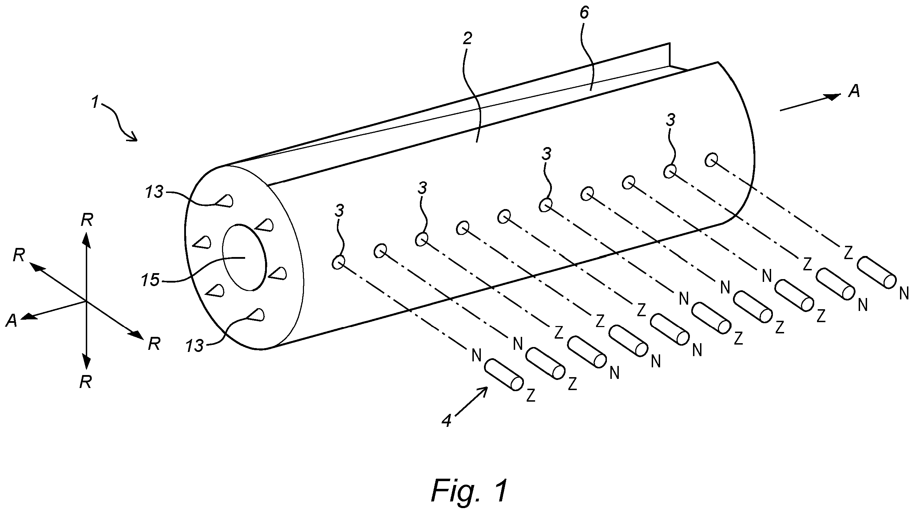

Fig. 1 shows a diagrammatic perspective view of a device 1 according to the present invention adding an identification code to a bicycle, comprising a holder 2 which comprises a series of magnet-holder locations 3 in which a magnet 4 is fittable in the holder 2, wherein the absence of a magnet or the orientation of the north and the south pole of a fitted magnet 4 is selectable at each of the magnet-holder locations 3, and wherein the identification code is formed by the combination of the respective orientations of the absences of magnets and the north and the south poles of fitted magnets 4. If the magnets 4 illustrated in Fig. 1 are arranged in the illustrated orientations, a code is produced which can be rendered as SSNNNSSSNN, with S being a magnetic south pole and N being a magnetic north pole.

It can also be seen that the holder 2 has a substantially rod-shaped outer side, wherein the magnet-holder locations 3 comprise recesses which extend in a radial direction R for holding magnets. The illustrated magnets 4 may be placed in one of the recesses, the direction from the north to the south pole of the magnet also extending radially with respect to the holder 2.

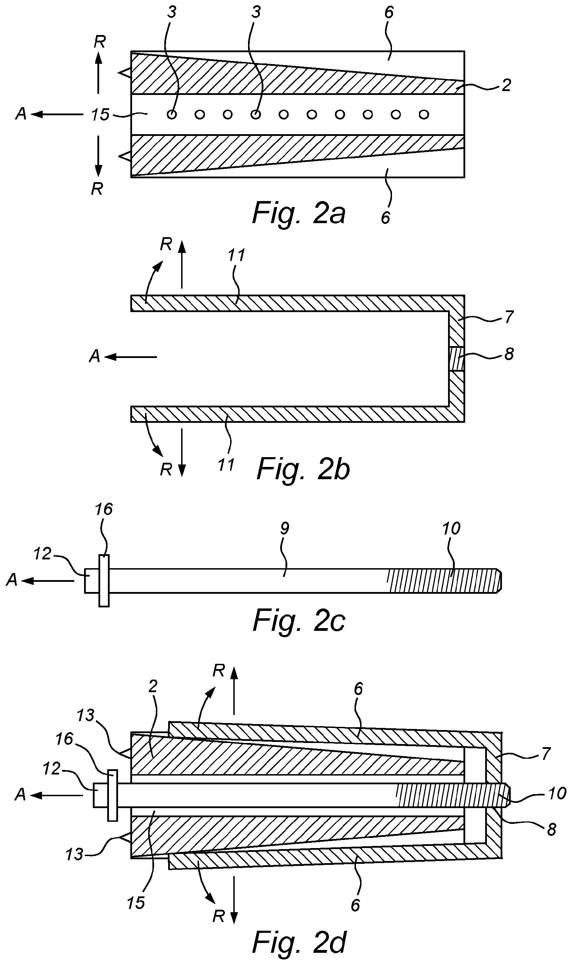

Fig. 2a shows a diagrammatic side view of the holder from Fig. 1, wherein the peripheral wall of the holder is provided with two slots 6 extending in the length direction, that is to say the axial direction A of the holder 2. The slots 6 are intended to accommodate a clamping element 7, illustrated in Fig. 2b, which is displaceable, with a movement component running in a radial direction, in order to clamp the device 1 in a tube of the frame of a bicycle.

Fig. 2b shows a clamping element 7 which is at least partly accommodable in the slots 6 of the holder 2 and comprises two splines 11 accommodable in the slots 6, wherein the slots 6, in the illustrated example, comprise surfaces which taper in a radial direction R with respect to the peripheral wall of the holder 2. In an alternative embodiment, the slots have the same depth everywhere and the splines are of a tapering design. The clamping element has a through-bore 8 provided with screw thread.

Fig. 2c shows an operating element 9 to be provided at a head end of the holder for displacing the splines 11 with respect to the slots 6. The operating element comprises a shaft provided with screw thread 10 at a first end and an engageable head 12 at a second end, situated opposite the first end. The engageable head 12 may, for example, be engaged by means of a socket spanner.

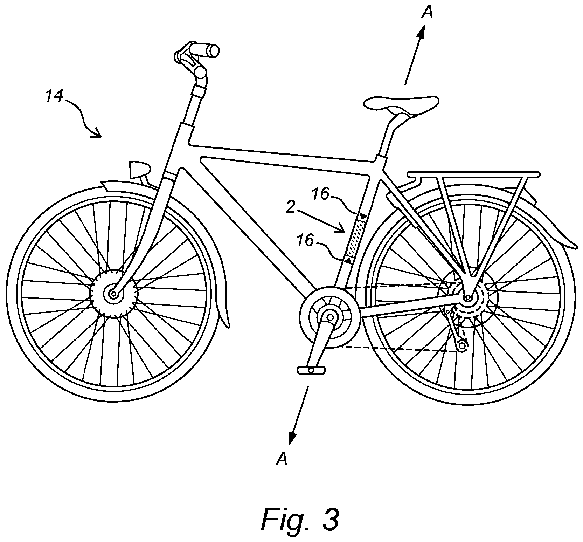

Fig. 2d shows the parts from Figs. 2a, b and c during fitting. The operating element 9 is inserted into a hollow passage 15 of the holder 2 and the screw thread 10 of the operating element engages with the screw thread in the opening 8 of the clamping element 7. By using a socket spanner or another suitable element to rotate the engagement element 12, the operating element 9 and the clamping element 7 are first moved towards each other in the axial direction A. As soon as the stop 16 of the operating element, which has a larger cross section than the hollow passage 15 through the holder 2, touches the holder 2, the operating element 9 is no longer able to move with respect to the holder 2, and the clamping element is pushed over the holder 2 in the axial direction A. In this case, the splines 11 are pushed through the slots 6 and pressed in the radial direction R. The moment the splines 11 touch a surrounding frame of a vehicle, for example a bicycle frame 14 (see Fig. 3), the device becomes fixed and rotating the operating element 9 may be stopped.

Fig. 3 shows a bicycle 14 wherein the device 1 is placed in a tube of a frame of the bicycle 14, more particularly in the tube of the frame intended to accommodate a saddle pin. After the device has been placed, a glue cartridge may be introduced in the frame which may be impaled on perforating elements 13 in order to make a glue flow over the device 2 and fix it. Optionally, a sealing, such as a metal disc, may be fitted subsequently. This renders removal of the device 2 from the bicycle 14 significantly more difficult. In the illustrated example, the bicycle is provided with marks 16 to indicate the location of the device 1 on the bicycle 14.

## Claims

1. Bicycle (14), comprising, placed in a tube of the frame of the bicycle (14), such as for example a tube intended to accommodate a saddle pin, a device for adding an identification code to the bicycle (14), comprising: a holder (2) which is provided in the bicycle frame, **characterised in that** said holder is provided with a series of magnet-holder (2) locations, wherein the absence or orientation of the north and the south pole of a magnet is selectable at each of the magnet-holder (2) locations, and wherein the identification code is formed by the combination of the respective absences or orientations of the north and the south poles of magnets provided at the magnet-holder (2) locations wherein the holder (2) for being provided in the bicycle (14) frame has a substantially rod-shaped, tube-shaped or pipe-shaped outer side, and comprises a clamping element (7) which is displaceable with at least one movement component running in a radial direction, in order to clamp the device in the frame of the bicycle (14), wherein the holder (2) is provided with magnet-holder (2) locations which are configured as recesses extending in a radial direction, provided with at least one magnet, placed in one of the magnet-holder (2) locations, wherein the direction from the north to the south pole of the magnet also extends radially with respect to the holder (2).

2. Bicycle (14) according to Claim 1, wherein the peripheral wall of the holder (2) is provided with at least one slot (6) extending in the length direction of the holder (2) and wherein the clamping element (7) comprises a spline which is accommodable in the slot (6), wherein the slot (6) and/or the spline comprise at least one surface which tapers in a radial direction with respect to the peripheral wall of the holder (2).

3. Bicycle (14) according to Claim 2, comprising an operating element (9) provided at a head end of the holder (2) for displacing the spline with respect to the slot (6).

4. Bicycle (14) according to one of the preceding claims, comprising at least one perforating-element such as a sharp protrusion, for penetrating a glue cartridge.

5. Bicycle (14) according to any of the preceding claims, comprising a mark to indicate the location of the device in the bicycle (14).

6. System for registering bicycle (14) owners, comprising a number of bicycles (14) according to any of the preceding claims, and a central database, in which at least identification means added to the bicycles (14) are stored, together with data about owners of the respective bicycles (14) which are coupled thereto.

## Patentansprüche

1. Fahrrad (14), umfassend eine in einem Rohr des Rahmens des Fahrrads (14), wie zum Beispiel einem Rohr, das dazu bestimmt ist, einen Sattelstift aufzunehmen, angeordnete Vorrichtung zum Hinzufügen eines Identifikationscodes zu dem Fahrrad (14), umfassend: eine Halterung (2), die in dem Fahrradrahmen vorgesehen ist, **dadurch gekennzeichnet, dass** die Halterung mit einer Reihe von Magnethalterungsstellen (2) versehen ist, wobei die Abwesenheit oder Ausrichtung des Nord- und des Südpols eines Magneten an jeder der Magnethalterungsstellen (2) wählbar ist, und wobei der Identifikationscode durch die Kombination der jeweiligen Abwesenheiten oder Ausrichtungen des Nord- und des Südpols von Magneten gebildet wird, die an den Magnethalterungsstellen (2) vorgesehen sind, wobei die Halterung (2), die in dem Fahrradrahmen (14) vorgesehen ist, eine im Wesentlichen stangenförmige, röhrenförmige oder rohrförmige Außenseite aufweist, und ein Spannelement (7) umfasst, das mit mindestens einer in radialer Richtung verlaufenden Bewegungskomponente verschiebbar ist, um die Vorrichtung im Rahmen des Fahrrads (14) einzuspannen, wobei die Halterung (2) mit Magnethalterungsstellen (2) versehen ist, die als sich in radialer Richtung erstreckende Ausnehmungen ausgebildet sind, die mit mindestens einem Magneten versehen sind, der in einer der Magnethalterungsstellen (2) platziert ist, wobei die Richtung vom Nord- zum Südpol des Magneten in Bezug auf die Halterung (2) auch radial verläuft.

2. Fahrrad (14) gemäß Anspruch 1, wobei die Umfangswand der Halterung (2) mit mindestens einem sich in Längsrichtung der Halterung (2) erstreckenden Schlitz (6) versehen ist und wobei das Spannelement (7) einen in dem Schlitz (6) aufnehmbaren Keil aufweist, wobei der Schlitz (6) und/oder der Keil mindestens eine sich in radialer Richtung zur Umfangswand der Halterung (2) verjüngende Fläche aufweisen.

3. Fahrrad (14) gemäß Anspruch 2, mit einem Betätigungselement (9), das an einem Kopfende der Halterung (2) vorgesehen ist, um den Keil in Bezug auf den Schlitz (6) zu verschieben.

4. Fahrrad (14) gemäß einem der vorhergehenden Ansprüche, umfassend mindestens ein perforierenden Element, wie z. B. einem scharfen Vorsprung, zum Durchstechen einer Klebstoffpatrone.

5. Fahrrad (14) gemäß einem der vorhergehenden Ansprüche, umfassend eine Markierung, die die Position der Vorrichtung im Fahrrad (14) anzeigt.

6. System zum Registrieren von Eigentümern von Fahrrädern (14), umfassend eine Anzahl von Fahrrädern (14) gemäß einem der vorhergehenden Ansprüche und eine zentrale Datenbank, in der mindestens an den Fahrrädern (14) angebrachte Identifikationsmittel zusammen mit Daten über Eigentümer der jeweiligen damit gekoppelten Fahrräder (14) gespeichert sind.

## Revendications

1. Vélo (14) comprenant, placé dans un tube du cadre du vélo (14), par exemple un tube destiné à loger une tige de selle, un dispositif d'ajout d'un code d'identification au vélo (14), comprenant : un support (2) qui est placé dans le cadre de vélo, **caractérisé en ce que** ledit support est muni d'une série d'emplacements de porte-aimant (2),
dans lequel l'absence ou l'orientation des pôles Nord et Sud d'un aimant peut être sélectionnée à chacun des emplacements de porte-aimant (2), et dans lequel le code d'identification est formé par la combinaison des absences ou des orientations respectives des pôles Nord et Sud des aimants placés sur les emplacements de porte-aimant (2),
dans lequel le support (2) destiné à être placé dans le cadre du vélo (14) présente sensiblement une forme de tige, une forme de tube ou un côté externe en forme de tuyau, et comprend un élément de serrage (7) qui peut être déplacé avec au moins un composant de déplacement placé dans une direction radiale, afin de serrer le dispositif dans le cadre du vélo (14), dans lequel le support (2) est muni d'emplacements de porte-aimant (2) qui sont conçus comme des évidements s'étendant dans une direction radiale, munis d'au moins un aimant, placé dans l'un des emplacements de porte-aimant (2), dans lequel la direction allant du pôle Nord au pôle Sud de l'aimant s'étend également radialement par rapport au support (2).

2. Vélo (14) selon la revendication 1, dans lequel la paroi périphérique du support (2) est munie d'au moins une fente (6) s'étendant dans la direction de longueur du support (2) et dans lequel l'élément de serrage (7) comprend une cannelure qui peut être logée dans la fente (6), dans lequel la fente (6) et/ou la cannelure comprend au moins une surface qui s'effile dans une direction radiale par rapport à la paroi périphérique du support (2).

3. Vélo (14) selon la revendication 2, comprenant un élément d'actionnement (9) placé à une extrémité de tête du support (2) pour déplacer la cannelure par rapport à la fente (6).

4. Vélo (14) selon l'une quelconque des revendications précédentes, comprenant au moins un élément de perforation tel qu'une protubérance pointue pour pénétrer dans une cartouche de colle.

5. Vélo (14) selon l'une quelconque des revendications précédentes, comprenant une marque pour indiquer l'emplacement du dispositif dans le vélo (14).

6. Système d'enregistrement de propriétaires de vélos (14), comprenant un certain nombre de vélos (14) selon l'une quelconque des revendications précédentes, et une base de données centrale dans laquelle au moins les moyens d'identification ajoutés aux vélos (14) sont stockés, conjointement à des données relatives aux propriétaires des vélos (14) respectifs auxquelles ils sont couplés.
